# EUROPEAN PATENT APPLICATION

(11) **EP 1 801 709 A1**
(43) Date of publication of application: **27.06.2007**
(21) Application number: 05028402.5
(22) Date of filing: 23.12.2005
(51) Int. Cl.: G06F 17/27, G06F 17/28, G10L 13/04, G01C 21/34, G01C 21/20, G08G 1/0968, G08G 1/0962, G10L 13/02

(54) **Speech generating system**

(71) Applicant: Harman Becker Automotive Systems GmbH, 76307 Karlsbad (DE)
(72) Inventor: Wellmann, Harald, 20259 Hamburg (DE)
(74) Representative: Bertsch, Florian Oliver

(57) **Abstract**

The present invention relates to a language generating system generating and outputting natural language data for informing a user of a predetermined event, the output data being possible in different natural languages, the system comprising:
- a data base (22) comprising, for each language, a grammar comprising transformation rules for obtaining a sequence of words comprising an information content corresponding to said predetermined event,
- a universal speech driver (21) which, for each of the different languages, builds the sequence of words having said information content corresponding to said predetermined event on the basis of the grammar,
- an information unit informing the user of the determined sequence of words.

## Description

This invention relates to a language generating system generating and outputting natural language data and to a method for informing a user by outputting natural language data. The invention relates especially to language generating systems of vehicle navigation systems. However, it should be understood that the invention can also be used in combination with other language generating systems.

### Related Art

In the art motor vehicle navigation systems are known and are increasingly offered in new vehicles for guiding the driver of the vehicle from the present location to a destination location. In many systems the guiding is done by announcing to the driver how to behave at an upcoming location. By way of example, the navigation system may alert the driver that he has to turn right at the next traffic light (e.g. "turn right in 200 meters", or "please leave the motorway at junction 15"). In addition to these acoustic driving recommendations for manoeuvres announcements are known which relate to the operating state of the system itself. By way of example the navigation system may inform the user that the route has been calculated after the destination location has been input by the user.

In the present context these two possible announcements are called the events about which the user is informed by outputting speech data.

In navigation systems there is a well-defined set of events, the events having different parameters. By way of example the parameter may be the distance, the road name, the direction the driver has to take etc. Additionally, the different events are language-independent. This means that even when the system supports multiple languages which is the case in nowadays navigation systems the information to be output to the driver has the same information content. In navigation systems the number of events and parameter types is rather small, but the number of combinations of events and parameter values is very large. As a consequence, a complete enumeration of announcements is not feasible. This means that in commonly used navigation systems all the possible announcements are not stored in the navigation system itself. In order to solve this problems announcements are constructed from speech fragments which are recorded from different speakers. The recorded fragments are stored in a data base of the navigation system. In order to safe space the recorded speech fragments are very small.

When the navigation system now wants to inform the user of a predetermined event, the announcement is constructed as a sequence of speech fragments or morphemes, a morpheme being the smallest unit of grammar consisting either of a word or a part of a word. In prior art systems for each supported language of the navigation system there is a speech driver that builds a morpheme sequence for the needed combination of events and parameters. A speech engine takes the morpheme sequence and plays the corresponding speech fragments to produce an announcement.

The speech engine is language-independent, however, the speech drivers are language-dependent so that one speech driver is provided for each language. As a consequence, when the navigation system should be used together with a new language, each new language requires a new software release with additional drivers. This makes the implementation of an additional language expensive and complicated.

Accordingly, a need exists to provide a language generating system which is able to inform the user of the sequence of words in an easy and cost-effective way, i.e. without a software change, the sequence of words being generated in a new language.

### Summary of the invention

This need is met by a language generating system and a method as mentioned in the independent claims. In the dependent claims preferred embodiments of the invention are described.

According to a first aspect of the invention a language generating system generating and outputting natural language data for informing a user of a predetermined event is provided, the output language data being possible in different natural languages. The system preferably comprises a database comprising a grammar for each of the languages, the grammar having transformation rules for obtaining a sequence of words having an information content corresponding to said predetermined event. Additionally, a universal speech driver is provided which, for each of the different languages, builds the grammatically correct sequence of words having said information content corresponding to said predetermined event on the basis of the grammar, the language generating system additionally comprising an information unit informing the user of the determined sequence of words and by outputting the language data to the user. The grammar is preferably a machine-readable grammar which comprises data and no executable code so that the universal speech driver can use the grammar for constructing the sequence of words through which a user is informed of an event in a grammatically correct way. The provision of the different grammars in the language generating system has the advantage that, when natural language data in a new language should be generated, a new speech driver for the corresponding language is not necessary any more as it was in the prior art speech generating systems mentioned in the introductory part of the description. According to the present invention, the language data in another language can be provided easily, when the grammar of the new language is known. There is no need to provide a new speech driver for the new language. Only by providing new grammar data in the database, the language generating system is able to "speak" in a new language.

According to a preferred embodiment of the invention the information unit may comprise a speech engine using the sequence of words for generating a natural language speech output in any of the languages. The speech engine generates the speech output based on the determined sequence of words. According to another embodiment of the invention the determined sequence of words may solely be indicated on a display so that the user is informed of the determined sequence of words by displaying a grammatically correct sequence of words. It is also possible that the two ways of informing a user described above are combined, i.e. that the speech engine generates a natural language speech output and that the same sequence of words is indicated on a display.

According to another embodiment of the invention the data base may furthermore comprise predetermined speech fragments for each language, the universal speech driver building the sequence of words based on the predetermined speech fragments. Preferably, the speech fragments are morphemes. A morpheme is the smallest meaningful unit of grammar in a language and consists either of a word or a part of a word. By way of example the word "dogs" consists of two morphemes and one syllable, a first morpheme "dog" and the second morpheme the plural "s". Here it can be seen that the "s" can just be a single morpheme and does not have to be a whole syllable. In another example the word "technique" consists only of one morpheme having two syllables. Even though the word has two syllables it is a single morpheme because it cannot be broken down into smaller meaningful parts. In another example the expression "unladylike" comprises three morphemes, a first morpheme "un" having the meaning of "not", the other morpheme "lady" having the meaning of a female adult human, and a third morpheme "like" having the meaning of "having the characteristic of". None of these morphemes can be broken up any more without losing all sense of meaning. By storing the morphemes the latter can be used for generating the speech output.

Instead of using morphemes it is also possible to use other units as the predetermined speech fragments. These speech fragments or units may also comprise several morphemes or may also comprise several different words. It may be possible that a predetermined combination of words which is not used in another context may be considered as one single unit. Accordingly, the speech fragments are chosen depending on the different context in which the speech fragment is used. When the speech fragment is used for different applications, the speech fragment may be the smallest possible unit which is a morpheme, in other cases the speech fragment may consist of several words, when these words will not be used in another context. This dependency of the choice of the speech fragments on the used context or on the different possible applications helps to reduce the complexity of the grammar stored in the database.

The speech fragments or morphemes can be stored in the same database as the grammar. However, it is also possible that different data bases are provided, one for the grammar and one for the speech fragments. Furthermore, it is possible that for each language an own database is provided, the database comprising the grammar and the morphemes of said language.

The universal speech driver can then build a sequence of morphemes once the exact sequence of words is known. The speech engine may then take the morpheme sequence and may play the corresponding speech fragments in order to produce the output speech data, or the information unit may display the morpheme sequence to the user.

According to another embodiment the system may furthermore comprise a Text-to-Speech engine which converts the determined sequence of words into a speech output. In this case the system needs not necessarily comprise the pre-recorded speech fragments in form of morphemes. When a Text-to-Speech engine is used the universal speech driver generates the text, i.e. the sequence of words, the sequence of words being output as speech data.

Preferably the predetermined event corresponds to an announcement of a vehicle multimedia system. This multimedia system may comprise a navigation unit guiding the user to a predetermined destination by outputting guiding announcements. Accordingly, the announcement may be an acoustic driving recommendation of the vehicle navigation system such as "turn right in 200 meters" or "turn left at the next traffic light". The announcement may also comprise an information of the operating status of the vehicle navigation system such as "the route has been calculated" when the system has finally calculated the route from the present location to the predetermined destination location.

According to a preferred embodiment of the invention the grammar is a language-specific functional unification grammar comprising functional descriptions of speech fragments on the basis of which the correct sequence of words having the information content corresponding to the predetermined event is generated. This grammar is a machine-readable grammar and comprises data and no executable code. By way of example the grammar defines the transformation rules to obtain a morpheme sequence for each event. By way of example the grammar has to produce the correct announcement for the following parameters: "turn right", "300", "meters". The grammar then determines the correct phrase such as "turn right in 300 meters". In the functional unification grammar expressions are described by its functional descriptions, each description having a plurality of descriptors. The descriptor may be a constituent set, a pattern or a feature. Functional unification grammars are known per se, one formalism being introduced by Michael Elhadad.

The invention further relates to a navigation system for guiding a user to a predetermined destination, the navigation system comprising a route determination unit for determining the route to the predetermined destination. Additionally, an information unit is provided for informing the user of the driving recommendation or the acoustic information about the operating status of the vehicle. Furthermore, the navigation system may comprise a language generating system as described above.

The information unit may be a loudspeaker for outputting the acoustic driving recommendations. However, the information unit may also be a display displaying the sequence of words comprising the driving recommendations.

Furthermore, the invention relates to a method for informing a user of a navigation system of a predetermined event by outputting natural language data. According to this method the natural language in which the language data are to be output is determined. In most cases the language is a default value which is determined when the navigation system is started. However, the language may also be changed during operation of the navigation system. When the language is known the sequence of words having an information content corresponding to the predetermined event can be determined based on a grammar of the determined language. As mentioned above, the grammar comprises the transformation rules for obtaining the correct sequence of words or the correct sequence of morphemes having the information content. Once the sequence of words is determined, the latter can be output by generating a speech output in the determined language or the sequence of words can be displayed to the user so that the user is informed of the content of the sequence of words.

When the morphemes are used as speech fragments the speech fragments can be pre-recorded and stored in the navigation system. Preferably, the speech fragments are recorded for each language from a native speaker, so that when the announcement is output to the user the user hears an announcement from a native speaker of the selected language.

Furthermore, the speech output may be produced from the generated sentence via a text-to-speech engine.

### Brief description of the drawings

Preferred embodiments of the invention are explained in more detail with reference to the accompanying drawings, in which
Fig. 1 shows a speech generating system of the prior art
Fig. 2 shows a language generating system according to the invention having a universal speech driver,
Fig. 3 shows an example of a functional unification grammar, and
Fig. 4 shows a flowchart with the different steps for generating a speech output in different languages without the use of different speech drivers.

### Detailed description of preferred embodiments

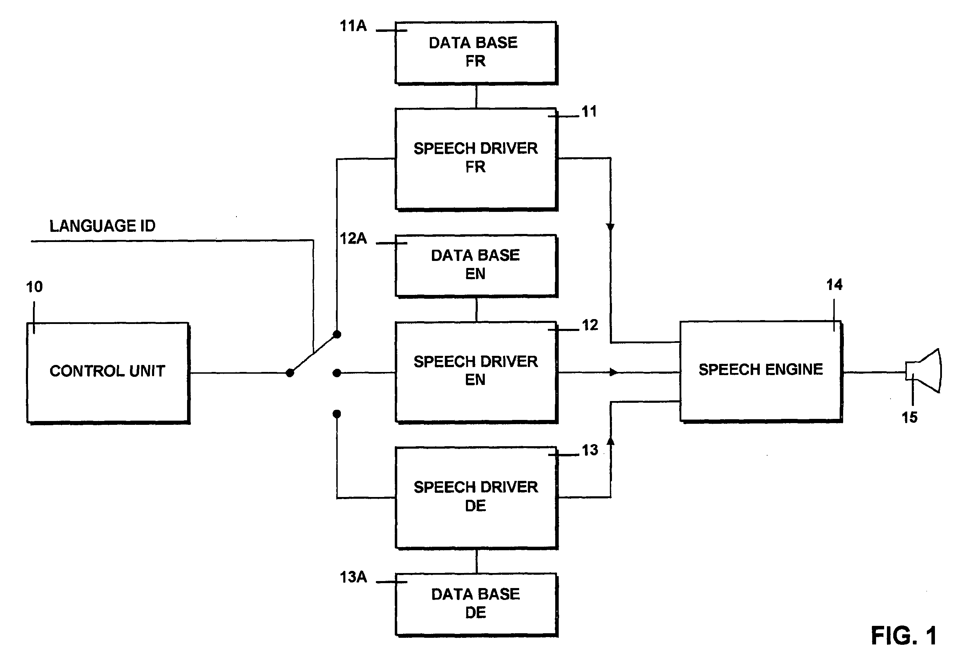

In Fig. 1 a prior art navigation system is shown. The system comprises a control unit 10 which controls the functioning of the navigation system. For generating an announcement the language of the announcement has to be known. To this end, a language ID signal controls the selection of the different speech drivers 11, 12, 13. In the embodiment shown the system is able to output announcements in three different languages, German, French, and English. However, it should be understood that any other set of languages may be used. The announcements are constructed from speech fragments which are stored in data basis 11a, 12a, and 13a comprising the data for the respective languages. The speech drivers 11, 12, 13 build the announcement as a sequence of the speech fragments stored in the data basis 11a, 12a, or 13a. Preferably each speech fragment has a unique ASCII representation. Furthermore, a speech engine 14 is provided which takes the constructed sequence of speech fragments and plays the corresponding speech fragments to produce an announcement which is output by the loudspeaker 15.

As can be seen in Fig. 1 there is one speech driver for each language. Accordingly, when the navigation system of Fig. 1 should be equipped with a new language a new speech driver for that language is required. This makes the implementation of new languages costly.

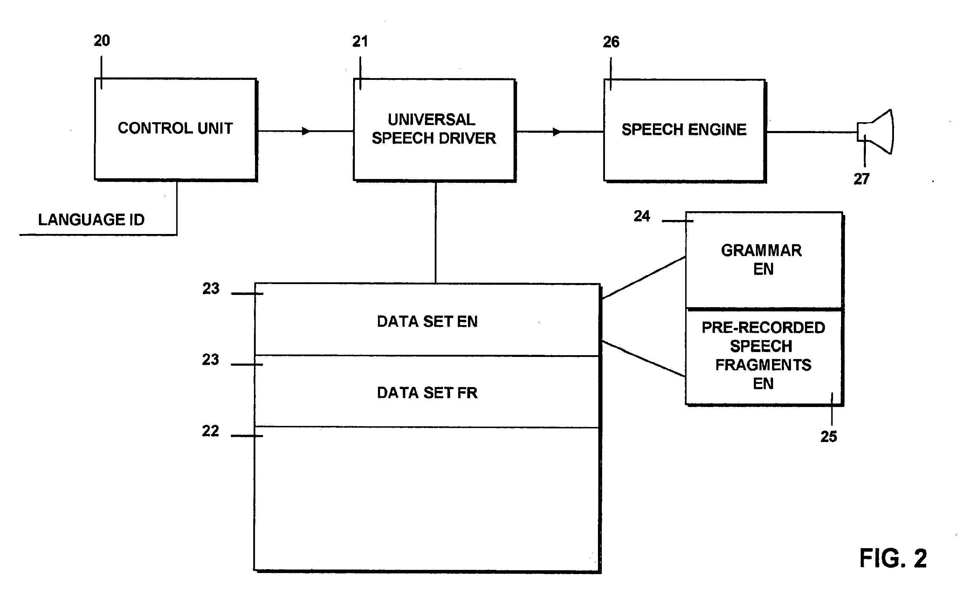

In Fig. 2 a system of the present invention is shown. The system comprises a main control unit 20 which receives the language ID signal identifying the language which should be used for outputting the announcement. The language ID signal needs not necessarily be input into the control unit, the language ID signal may also be directly fed to a universal speech driver 21. The universal speech driver has the same function as the speech driver of Fig. 1, i.e. the speech driver has to determine the correct sequence of words or morphemes. However, in the contrary to the embodiment shown in Fig. 1 the system of Fig. 2 only comprises one universal speech driver. In order to generate the correct sequence of words in different languages, the universal speech driver uses a database 22 comprising different data sets 23. In the embodiment shown the data sets 23 comprise the information which are needed to generate the correct announcement for one language. In the embodiment shown the data set for English comprises an English grammar 24, the grammar defining the correct grammatical form of an announcement. The data set 23 may additionally comprise pre-recorded speech fragments 25. In the present embodiment of a navigation system the pre-recorded speech fragments may comprise the morphemes needed to guide a user to a predetermined destination such as right, left, meter, turn, straight, etc.

In the same way the French data set 23 comprises a French grammar which is needed for correctly producing the French version of the information to be output by the navigation system. Additionally, French morphemes may be stored which are used for obtaining the morpheme sequence.

It should be understood that the different grammars and/or the different speech fragments may also be stored in a different configuration.

It is also possible that the grammar which is needed for building the correct sentence is not stored in the speech generating system itself, but may be stored in a database remote from the speech generating system. In this case the language generating system may access the database through a wireless communication network. Nowadays navigation systems often also comprise a telecommunication module allowing the use of a cellular phone. In this case the user may access a server which may be reached through the Internet, on which the data of a new grammar are stored. In the case the user wants a language generating system to output language data in a new language, the new grammar has to be downloaded to the language generating system. It may be the case that the user has to pay for this new language capabilities. Accordingly, it is possible that the user has to register at the server providing the different grammars first, before a new grammar can be downloaded. The transmission via wireless or wired communication systems allows the provision of new languages in an easy way.

Once the universal speech driver has determined the correct sequence of words or sequence of morphemes based on the grammar, the latter is fed to a speech engine 26 which generates the speech output which is output via a loudspeaker 27. Instead of generating a speech output the sequence of words can also be displayed on a display.

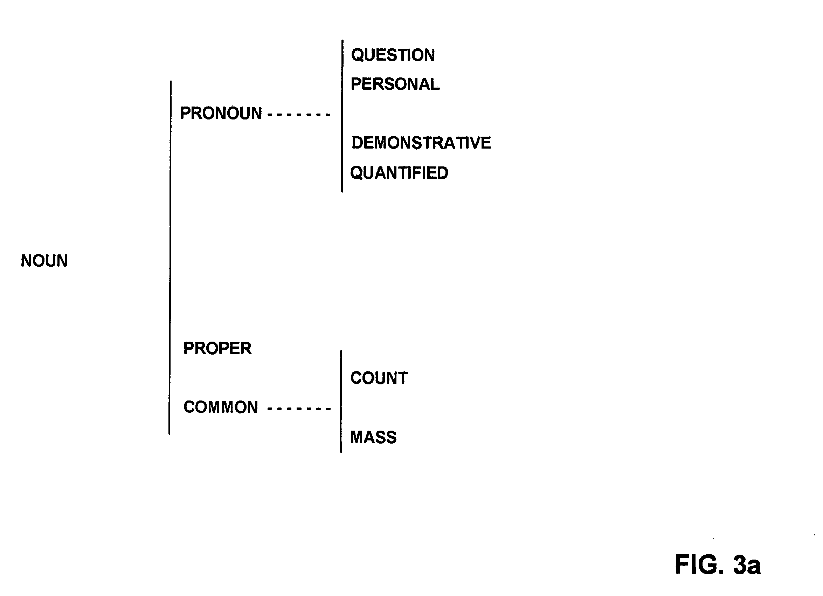

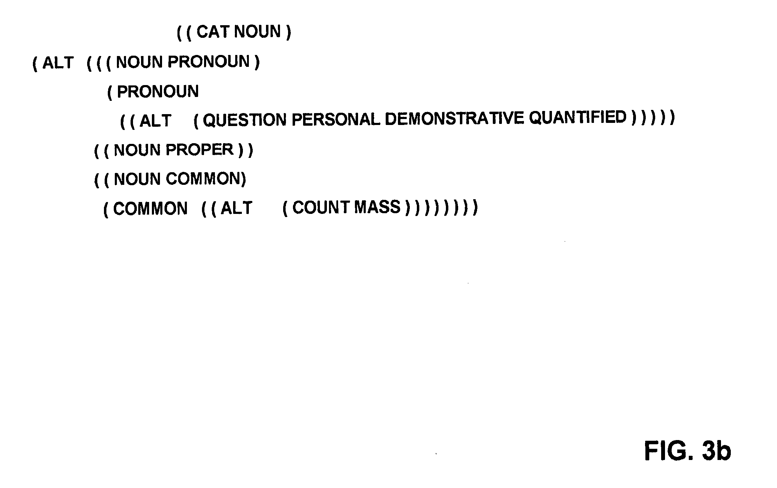

In Fig. 3a to 3c examples of a functional unification grammar are shown. Fig. 3a shows the different meanings of a noun. The noun can be either a pronoun, a proper noun or a common noun. These three features are mutually exclusive. Furthermore, it can be seen that the choice between the features "question", "personal", "demonstrative", "quantified" is relevant only when the feature "pronoun" is selected. The system therefore forbids combinations of the type pronoun, proper, and common, personal. In the functional unification grammar the way of expressing these constraints is shown in Fig. 3b.

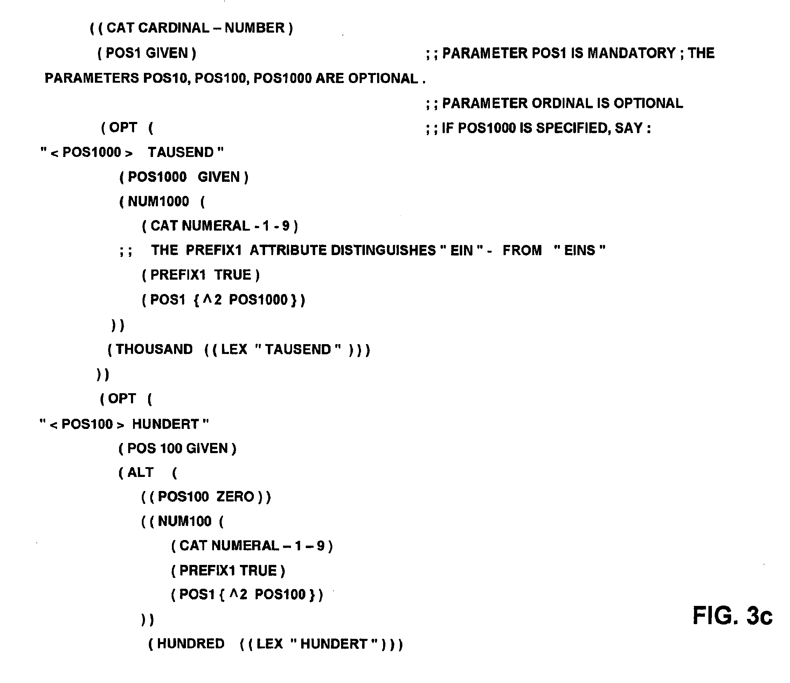

In Fig. 3c a part of a grammar is shown which can be used for generating the correct announcement for numbers in German language. By way of example this grammar is necessary in order to obtain the correct German expression for an announcement such as "turn right in 350 meters", etc.

Functional unification grammars are known in a large variety of implementations. In the context of the present invention the grammar has to be a machine-readable grammar allowing the building of grammatically correct sequences of words by the universal speech driver.

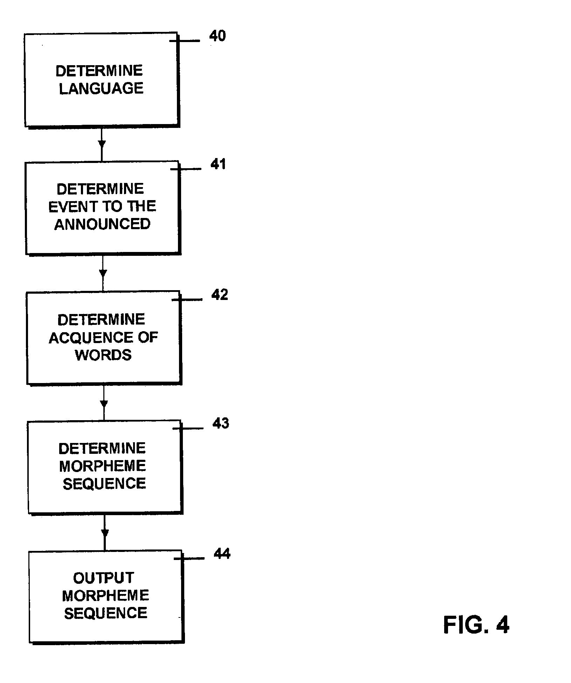

In Fig. 4 a flowchart is shown illustrating the different steps carried out for outputting speech data in different languages with the use of one universal speech driver. In a first step 40 the language has to be determined in which the announcement should be output. Once the language is determined, the event has to be determined which should be announced to the user. By way of example, the event could comprise the information that the user of the system has reached its destination in 300 meters (step 41). When the content information of the event is known the universal speech engine 21 shown in Fig. 2 can determine the sequence of words in step 42. To this end the universal speech driver will access the grammar for the determined language in order to produce a grammatically correct sequence of words. In the case that pre-recorded speech fragments or phonemes are used the phoneme sequence of the determined sequence of words can be determined in step 43. Last but not least the morpheme sequence is output to the user, so that the user is informed of the content of the announcement (step 44).

Normally the steps 42 and 43 do not need to be separate steps, but by unification with the unification grammar a sequence of morphemes is generated without generating the sequence of words first which will be divided into a sequence of morphemes. The grammar could also be designed in such a way that the grammar generates plain text or the phonetic transcription in dependence of an input parameter.

As can be seen from the above description, the present invention provides a possibility to produce announcements in different languages with the use of one universal speech driver. When a new language should be added to the system it is only necessary to add new grammar data to the database which is then interpreted by the speech driver. The provision of a new speech driver and the corresponding software change is not necessary.

## Claims

1. Language generating system generating and outputting natural language data for informing a user of a predetermined event, the output data being possible in different natural languages, the system comprising:
- a data base (22) comprising, for each language, a grammar comprising transformation rules for obtaining a sequence of words comprising an information content corresponding to said predetermined event,
- a universal speech driver (21) which, for each of the different languages, builds the sequence of words having said information content corresponding to said predetermined event on the basis of the grammar,
- an information unit informing the user of the determined sequence of words.

2. Language generating system according to claim 1, **characterized by** further comprising a speech engine (26) using the sequence of words for generating a natural language speech output in any of the languages.

3. Language generating system according to claim 1 or 2, **characterized in that** the data base (22) furthermore comprises predetermined speech fragments (25) for each language,
the universal speech driver (21) building the sequence of words based on the speech fragments.

4. Language generating system according to claim 3, **characterized in that** the speech fragments are morphemes.

5. Language generating system according to any of the preceding claims, **characterized by** further comprising a Text-To-Speech engine which converts the sequence of words into said speech output.

6. Language generating system according to any of the preceding claims, **characterized in that** the predetermined event corresponds to an announcement of a vehicle multimedia system.

7. Language generating system according to claim 6, **characterized in that** the announcement is an acoustic driving recommendation of a vehicle navigation system or an acoustic information about an operating status of the vehicle navigation system.

8. Language generating system according to any of the preceding claims, **characterized in that** the grammar is a language specific functional unification grammar comprising functional descriptions of speech fragments, on the basis of which the correct sequence of words having the information content corresponding to the predetermined event is generated.

9. Language generating system according to any of the preceding claims, **characterized by** further comprising a language identifier which identifies the language of the speech data to be output and transmits the language information to the universal speech driver, the speech driver selecting the corresponding grammar and the corresponding speech fragments for building the correct sequence of words.

10. Navigation system for guiding a user to a predetermined destination, comprising:
- a route determination unit for determining a route to a predetermined destination,
- a language generating system as mentioned in any of claims 1 to 8, and
- an information unit for informing the user of the generated natural language.

11. Method for informing a user of a navigation system of a predetermined event by outputting natural language data, comprising the following steps:
- determining the natural language in which the language data are to be output,
- determining a sequence of words having an information content corresponding to said predetermined event based on a grammar of the determined language, the grammar comprising transformation rules for obtaining the correct sequence of words having said information content,
- informing the user of the sequence of words in the determined language.

12. Method according to claim 11, wherein the user is informed of the sequence of words by generating a natural language output comprising the determined sequence of words.

13. Method according to claim 12, **characterized in that** the output language data correspond to an announcement of the navigation system, the announcement being acoustic driving recommendations or an information about an operating status of the navigation system.

14. Method according to any of claims 11 to 13, **characterized in that**, for determining the sequence of words, a sequence of pre-recorded speech fragments is determined, the sequence of pre-recorded speech fragments being output as speech data.

15. Method according to claim 14 **characterized in that** said pre-recorded speech fragments are recorded, for each language, from a native speaker.

16. Method according to any of claims 12 to 15 **characterized in that** the speech output is produced from the generated sentence via a text-to-speech engine.

## Amended claims

### Amended claims in accordance with Rule 86(2) EPC.

**1.** Navigation system for guiding a user to a predetermined destination, comprising:
- a route determination unit for determining a route to a predetermined destination,
- a language generating system generating and outputting natural language data for informing a user of a predetermined event, the output data being possible in different natural languages, the system comprising:
- a data base (22) comprising, for each language, a grammar comprising transformation rules for obtaining a sequence of words comprising an information content corresponding to said predetermined event,
- a universal speech driver (21) accessing the data base (22) which, for each of the different languages, builds the sequence of words having said information content corresponding to said predetermined event on the basis of the grammar,
- an information unit informing the user of the determined sequence of words.

**2.** Navigation system according to claim 1, **characterized by** further comprising a speech engine (26) using the sequence of words for generating a natural language speech output in any of the languages.

**3.** Navigation system according to claim 1 or 2, **characterized in that** the data base (22) furthermore comprises predetermined speech fragments (25) for each language,
the universal speech driver (21) building the sequence of words based on the speech fragments.

**4.** Navigation system according to claim 3, **characterized in that** the speech fragments are morphemes.

**5.** Navigation system according to any of the preceding claims, **characterized by** further comprising a Text-To-Speech engine which converts the sequence of words into said speech output.

**6.** Navigation system according to any of the preceding claims, **characterized in that** the predetermined event corresponds to an announcement of a vehicle multimedia system.

**7.** Navigation system according to claim 6, **characterized in that** the announcement is an acoustic driving recommendation of a vehicle navigation system or an acoustic information about an operating status of the vehicle navigation system.

**8.** Navigation system according to any of the preceding claims, **characterized in that** the grammar is a language specific functional unification grammar comprising functional descriptions of speech fragments, on the basis of which the correct sequence of words having the information content corresponding to the predetermined event is generated.

**9.** Navigation system according to any of the preceding claims, **characterized by** further comprising a language identifier which identifies the language of the speech data to be output and transmits the language information to the universal speech driver, the speech driver selecting the corresponding grammar and the corresponding speech fragments for building the correct sequence of words.

**10.** Method for informing a user of a navigation system of a predetermined event by outputting natural language data the output being possible in different natural languages, comprising the following steps:
- determining the natural language in which the language data are to be output,
- determining, by a universal speech driver, a sequence of words having an information content corresponding to said predetermined event based on a grammar of the determined language, wherein the universal speech driver accesses a data base (22) comprising, for each language, the grammar, the grammar comprising transformation rules for obtaining the correct sequence of words having said information content,
- informing the user of the sequence of words in the determined language.

**11.** Method according to claim 10, wherein the user is informed of the sequence of words by generating a natural language output comprising the determined sequence of words.

**12.** Method according to claim 11, **characterized in that** the output language data correspond to an announcement of the navigation system, the announcement being acoustic driving recommendations or an information about an operating status of the navigation system.

**13.** Method according to any of claims 10 to 12, **characterized in that**, for determining the sequence of words, a sequence of pre-recorded speech fragments is determined, the sequence of pre-recorded speech fragments being output as speech data.

**14.** Method according to claim 13 **characterized in that** said pre-recorded speech fragments are recorded, for each language, from a native speaker.

**15.** Method according to any of claims 11 to 14 **characterized in that** the speech output is produced from the generated sentence via a text-to-speech engine.
